# EUROPEAN PATENT SPECIFICATION

(11) **EP 0 914 653 B1**
(45) Date of publication and mention of the grant of the patent: **16.06.2004**
(21) Application number: 98907662.5
(22) Date of filing: 27.02.1998
(51) Int. Cl.: G11B 7/24, G11B 17/04, G11B 23/40

(54) **TWO-SIDED HYBRID DVD-CD DISC**
ZWEISEITIGE HYBRIDE DVD-CD-PLATTE
DISQUE HYBRIDE DVD-CD A DEUX FACES

(30) Priority: 28.02.1997 US 808348
(43) Date of publication of application: 12.05.1999
(73) Proprietor: Dierks, Dieter, 50259 Pulheim (DE)
(72) Inventor: SEIDEL, Robert, T., West Pittston, PA 18643 (US)
(74) Representative: Bauer, Wulf, Dr.
(86) International application number: PCT/US1998/003844
(87) International publication number: WO 1998/038637

(56) References cited:
- EP-A- 0 745 985
- US-A- 5 509 991
- US-A- 5 518 325
- US-A- 5 706 269

## Description

### Field of the Invention

This invention relates to hybrid optical discs in accordance with the generic part of claim 1. On such a disc primarily digital data is optically stored in a series of pits and lands on a plastic surface. In particular the invention relates to data storage in both standard audio CD format and in a super-dense (DVD) format on the same structure.

### Background of the Invention

The a.m. hybrid optical disc according to the generic part of claim 1 is known from JP 08297859 A. This document teaches (see e.g. abstract) an optical hybrid disc composed of two different disc bodies 2a, 2b, namely a CD disc body and a DVD disc body. The two disc bodies have different thicknesses. The CD disc body 2a has a thickness of 1,2 mm, a data surface 3a and a flat outer surface through which the data surface 3a is viewable by a scanning laser. A metallization layer is deposited on the data surface 3a. The DVD disc body 2b has a thickness of 0,6 mm, a data surface 3b and a flat outer surface through which the data surface 3b is viewable by a scanning laser. A metallization layer is deposited on the data surface 3b. The two disc bodies are fixed together with their data surfaces facing each other by an adhesive layer 5. The total thickness of the hybrid disc is 1,8 mm. The ratio between the thickness of the CD disc body 2a and the thickness of the DVD disc body 3a is 2.

EP-A-0 745 985 teaches an optical hybrid disc having two different data recording surfaces, especially a CD data recording surface and a DVD data recording surface. Both data recording surfaces are viewable through the same outer surface. The CD data recording surface is read through the DVD data recording surface.

WO-A-98/00842 teaches an optical hybrid disc having a CD data recording surface 8 and a DVD data recording surface 6. The reading laser enters the disc through but one outer surface, namely through upper face 4a. The laser reading the CD data recording surface traverses the DVD data recording surface on the way towards the CD data recording surface and again on the way back to the upper surface.

US-A-5 509 991 teaches to form a label image on an optical recording medium.

DE article "Das CD-System" by Jos Verstraten, elrad 1989 vol. 7/8 and 9, DIN EN 60908 and ECMA Standard 267 refer generally to a CD and a DVD. The total thickness of a CD is specified to be between 1,5 and 1,1 mm.

The critical dimensions of the recorded pits on the glass master are of the order of magnitude of the wavelength of visible light used to read the data. Advances in technology have resulted in a new format of disc, termed the DVD disc, that utilizes substantially smaller pit dimensions and accordingly is read using light having a proportionally shorter wavelength. One feature of the new DVD format is that the plastic surface formed by injection molding in which the data is recorded is roughly half the thickness of the previous (now conventional) CD disc. In order to provide rigidity to the "half height" DVD data surface it is normally backed with a plastic layer of equal "half height" thickness.

Thus there has resulted compact discs having different data formats and needing to be played on different players as an inevitable result of the striving to improve disc data storage. This inevitably creates problems for the distributor and the customer who must be burdened with having to be aware of inventories of varying disc formats. To effectuate a transition it is desirable to provide a single disc that could be played on different players designed for the different disc formats.

It is the object of the invention to improve the a.m. hybrid optical disc so that the disc is within the thickness specification of a compact disc, e.g. CD and DVD. This object is solved by the features of claim 1.

### BRIEF DESCRIPTION OF THE INVENTION

This invention is a single disc, playable in either a CD or DVD player, which has bonded back-to-back a half height standard format compact disc metalized substrate and a metalized DVD substrate, resulting in a two-sided hybrid DVD-CD disc. Each side can be played in its corresponding player. The format for the CD side is preferably any of the conventional Sony/Philips formats, including but not limited to CD-Audio, CD-ROM, CD-I, CD+G, CD-ROM XA, CD-PLUS and CD-VIDEO. The disc format for the DVD side can be any of the DVD formats, including without limitation DVD-VIDEO, DVD-ROM, and DVD-Audio.

The format allows content developers to market a single disc that users can play on either a CD or DVD player.

### BRIEF DESCRIPTION OF THE DRAWINGS

Fig. 1 shows a cross section of a portion of a prior art full height CD format compact disc.
Fig. 2 shows a cross section of a portion of a prior art full height DVD format compact disc.
Fig. 3 shows a cross section of a portion of a half height CD formatted compact disc component.
Fig. 4 shows a cross section a portion of a hybrid compact disc of the present invention.

### DETAILED DESCRIPTION OF A PREFERRED EMBODIMENT

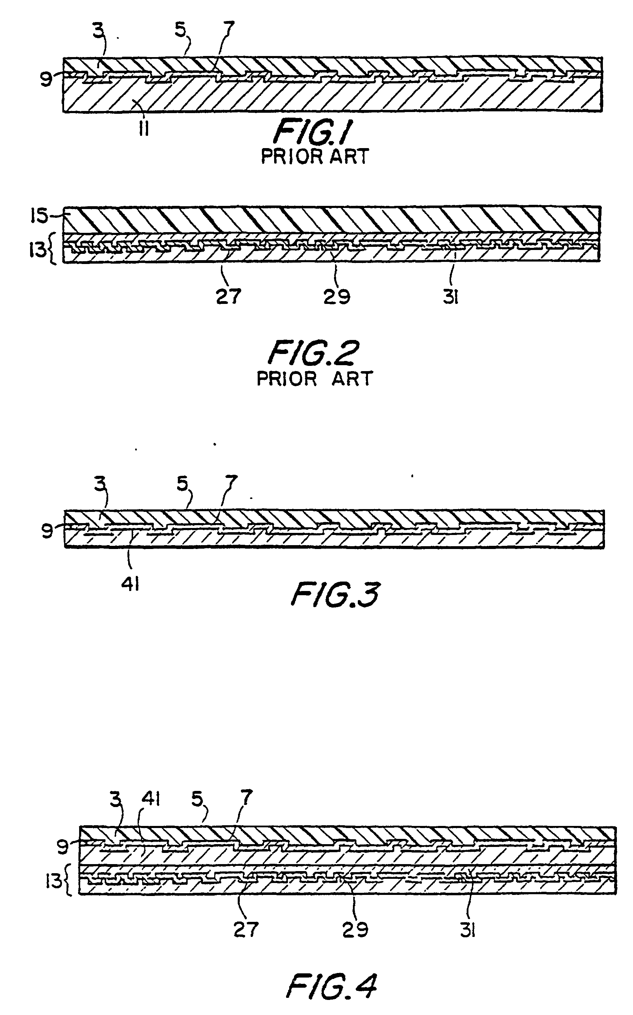

The disc of the present invention has two data surfaces whose metallization layers face each other along an inner surface of the disc and are held together by a bonding agent. This is depicted as the compact disc 1 in Fig. 4. To make this clearer, Fig.1 depicts a conventional (i.e. prior art) full height CD 1. This comprises a plastic data recording layer 3 with a flat upper surface 5 through which the irregular data recording surface 7 is viewable by a scanning laser 9. To increase the reflectivity of the data of layer 7 a metallization layer 9 is deposited. A layer 11, which does not need to be transparent is then deposited on the metallization layer 9 to protect the latter and to provide the full height of the disc. The figure is, of course, not shown to scale, but is intended to schematically represent a disc of full height.

Fig. 2 depicts the DVD disc of the prior art. It is shown inverted with respect to Fig. 1 so that the laser views the data surface from below. The half height disc 13 is bonded by adhesive to a supporting half height disc 15. More specifically, the data surface is overcoated by a metallization layer 29, which is in turn overcoated by a protective layer 31 to which is adhered the supporting disc 15, making up the full height of the disc.

Fig. 3 shows a half height disc in the CD format. The pit size in Fig. 3 and Fig. 1 are intended to be the same.

Fig. 4 depicts a preferred embodiment of the present invention in which two half height discs such as the half height CD format depicted in Fig.3 and the lower half height composite of layers depicted as 13 in Fig. 2 are bonded together. The result is that the two metallization layers 29 and 9 face each other, and each of the two data surfaces 7 and 27 are viewable by a laser directed from above in the case of the CD and from below in the case of the DVD. Of course, these orientations are relative, and for players where the laser is directed upwards from below, the DVD formatted surface is readable as described and the CD formatted surface is readable by inverting the disc.

A label area may be provided on each disc away from the data areas so as to not interfere with the readable surfaces. It should also be understood that as an alternative to providing protective layers on the facing sides of the metallization layers, which are then bonded together, it is possible to use an adhesive that also provides a protective function for either or both of the two metallization layers, provided that the height of the resulting disc composite is maintained.

Alternatively, it is possible to place labels on the disc by replacing the metallization layers with a dielectric layer that is reflective of the laser frequency used to read the data and is transmissive of a broad portion of the visible optical spectrum.

In this application, spectral tuning the thin film dielectric coating occurs by designing a dielectric thin film coating with a reflectivity equal to the metallic reflectivity at the playback wavelength of the optical reading system. At the same time, the coating transmits 99% of the entire visible spectrum of wavelengths. An optical index matching balsam is added to improve reflectivity performance.

The described thin film dielectric coating permits the viewing of graphical information while maintaining full playability/readability of the encoded optical substrate information. In this embodiment logos and other information may be placed at the position indicated in Fig. 4 for the adhesive layer 41. The additional layers are layers of ink and are not separately depicted in the figures.

A unique feature of this invention is the combination of two distinct optical disc formats into one rigid disc. In operation a consumer has a disc which is capable of playing on both CD and DVD players. This allows content developers to have the ability to market their property to both the CD and DVD player consumer using one disc, rather than distributing one disc for CD customers and another disc for DVD customers.

While there have been shown and described and pointed out the fundamental novel features of the invention as applied to preferred embodiments thereof, it will be understood that various omissions and substitutions and changes in the form and details of the device illustrated and in its operation may be made by those skilled in the art without departing from the spirit of the invention. It is the intention, therefore, to be limited only as indicated by the scope of the claims appended hereto.

## Claims

1. A two sided hybrid disc comprising
a CD disc body and a DVD disc body, which disc bodies have different thicknesses,
the CD disc body having:
- a data recording surface (7) containing data according to the CD-format,
- a flat outer surface (5) through which the opposite data recording surface (7) is viewable by a scanning laser, and
- a metallization layer (9) deposited on the data recording surface (7);
the DVD disc body having:
- a data recording surface (27) containing data according to the DVD-format,
- a flat outer surface through which the opposite date recording surface (27) is viewable by a scanning laser, and
- a metallization layer deposited on the data recording surface (27); the two disc bodies being fixed together by an adhesive layer, so that said flat outer surfaces form the two outer surfaces of the hybrid disc, **characterized in that** the CD disc body is a half height standard format CD and that the two disc bodies and the adhesive layer form a hybrid disc of a thickness of a full height CD.

2. The disc of claim 1, wherein substantially the same data is recorded on the data recording surface (7) of the CD disc body and on the data recording surface (27) of the DVD disc body.

3. The disc of claim 1, wherein said data recording surfaces (7, 27) have labels viewable through the data recording surfaces (7, 27) of said disc bodies.

## Patentansprüche

1. Eine zweiseitige Hybrid-Diskette, die aufweist:
- einen CD-Diskettenkörper und einen DVD-Diskettenkörper, diese Diskettenkörper haben unterschiedliche Dicken,
der CD-Diskettenkörper weist auf:
- eine Datenspeicherfläche (7), die Daten nach dem CD-Format aufweist,
- eine ebene Außenfläche (5), durch die die gegenüberliegende Datenspeicherfläche (7) für einen abfragenden Laser sichtbar ist, und
- eine Reflexionsschicht (9), die auf die Datenspeicherfläche (7) aufgebracht ist;
der DVD-Diskettenkörper weist auf:
- eine Datenspeicherfläche (27), die Daten nach dem DVD-Format aufweist,
- eine ebene Außenfläche, durch die die gegenüberliegende Datenspeicherfläche (27) für einen abfragenden Laser sichtbar ist, und
- eine Reflexionsschicht, die auf die Datenspeicherfläche (7) aufgebracht ist;
die beiden Diskettenkörper sind mittels einer Klebstoffschicht miteinander verbunden, so dass die genannten ebenen Außenflächen die beiden Außenflächen der Hybrid-Diskette bilden,
**dadurch gekennzeichnet, dass** der CD-Diskettenkörper eine halbhohe Standardformat-CD ist und dass die beiden Diskettenkörper und die Klebstoffschicht eine Hybrid-Diskette mit der Dicke einer CD voller Höhe bilden.

2. Die Diskette nach Anspruch 1, wobei im Wesentlichen dieselben Daten auf der Datenspeicherfläche (7) des CD-Diskettenkörpers und auf der Datenspeicherfläche (27) des DVD-Diskettenkörpers gespeichert sind.

3. Die Diskette nach Anspruch 1, wobei die genannten Datenspeicherflächen (7, 27) Labels aufweisen, die durch die Datenspeicherflächen (7, 27) dieser Diskettenkörper hindurch sichtbar sind.

## Revendications

1. Un disque hybride bilatéral comportant un corps de disque de CD et un corps de disque de DVD, lesquels corps de disque ont différentes épaisseurs, le corps de disque de CD ayant:
- une surface d'enregistrement de données (7) contenant des données selon le CD format,
- une surface externe plate (5) par laquelle la surface opposée d'enregistrement de données (7) est perceptible par un laser de balayage, et
- une couche de métallisation (9) déposé sur la surface d'enregistrement de données (7);
le corps de disque de DVD ayant:
- une surface d'enregistrement de données (27) contenant des données selon le DVD format,
- une surface externe plate par laquelle la surface opposée d'enregistrement de données (27) est perceptible par un laser de balayage, et
- une couche de métallisation déposée sur la surface d'enregistrement de données (27);
les deux corps de disque étant fixé ensemble par une couche adhésive, de sorte que lesdites surfaces externes plates forment les deux surfaces externes du disque hybride,
**caractérisé en ce que** le corps de disque de CD est un demi de format standard de taille CD et **en ce que** les deux corps de disque et la couche adhésive forment un disque hybride d'une épaisseur d'un plein CD de taille.

2. Le disque selon la revendication 1, où sensiblement les mêmes données sont enregistrées sur la surface d'enregistrement de données (7) du corps de disque de CD et sur la surface d'enregistrement de données (27) du corps de disque de DVD.

3. Le disque de la revendication 1, où lesdites surfaces d'enregistrement de données (7, 27) ont des étiquettes perceptible à travers les surfaces d'enregistrement de données (7, 27) de lesdits corps de disque.
